# EUROPÄISCHE PATENTSCHRIFT

(11) **EP 1 361 095 B1**
(45) Veröffentlichungstag und Bekanntmachung des Hinweises auf die Patenterteilung: **14.06.2006**
(21) Anmeldenummer: 03007695.4
(22) Anmeldetag: 03.04.2003
(51) Int. Cl.: B60J 10/00, B60J 7/057, B60J 1/17, B60J 10/02, B60J 10/04, B60J 10/10, E05F 15/00

(54) **Vorrichtung zum Erkennen eines Hindernisses in dem Öffnungsbereich eines bewegbaren Schliesselements eines Kraftfahrzeugs**
Obstacle detector for motor vehicle movable element closing an openable area
Dispositif détecteur d'obstacle pour élément amovible de fermeture d'une partie ouvrable de véhicule automobile

(30) Priorität: 07.05.2002 DE 10220725
(43) Veröffentlichungstag der Anmeldung: 12.11.2003
(73) Patentinhaber: Metzeler Automotive Profile Systems GmbH, 88131 Lindau/Bodensee (DE)
(72) Erfinder: Staus, Steffen, Dr., 88131 Lindau (DE)
(74) Vertreter: Preissner, Nicolaus

(56) Entgegenhaltungen:
- EP-A- 0 648 628
- EP-A- 0 856 425
- EP-A- 1 154 110
- DE-U- 29 921 958
- US-A- 5 023 418
- US-B1- 6 373 005

## Beschreibung

Die Erfindung betrifft eine Vorrichtung zum Erkennen eines Hindernisses in dem Öffnungsbereich eines zwischen einer Offenstellung und einer Schließstellung bewegbaren Schließelements eines Kraftfahrzeugs, insbesondere einer elektrisch angetriebenen Fensterscheibe oder eines Schiebedachs. Die Vorrichtung ist mit einem ein Hindernis in dem Öffnungsbereich des Schließelements erfassenden Sensor versehen, der wenigstens einen ein elektrisches Feld in dem Öffnungsbereich des Schließelements erzeugenden elektrischen Leiter aufweist.

Derartige Vorrichtungen stellen einen Einklemmschutz dar, der dazu dient, das Einklemmen etwa eines menschlichen Körperteils zwischen einer verfahrbar angetriebenen Fensterscheibe und einer die Fensterscheibe zumindest teilweise umgebenden Kante zu verhindern. Zu diesem Zweck weisen bekannte Vorrichtungen einen Sensor auf, der die Anwesenheit eines Hindernisses in dem Öffnungsbereich der ein Schließelement darstellenden Fensterscheibe erfaßt und ein Steuersignal für einen die Fensterscheibe bewegenden Antrieb bereitstellt. In Hinsicht auf die Funktionsweise des Sensors lassen sich die bekannten Vorrichtungen unterteilen in einen Einklemmschutz, der einen physischen Kontakt des Hindernisses erfordert, und einen Einklemmschutz, der berührungslos arbeitet.

Ein zu der ersten Gruppe zu zählender Einklemmschutz wird beispielsweise in der DE 199 13 105 A1 beschrieben. Die bekannte Vorrichtung weist eine Dichtung auf, die ein Schließelement abdichtet und mit zwei voneinander beabstandeten, elektrisch leitfähigen Bereichen versehen ist. Bei einem physischen Kontakt mit einem in dem Öffnungsbereich des Schließelements befindlichen Hindernis werden die leitfähigen Bereiche aneinandergedrückt, wodurch sich ein Schaltkontakt ergibt, der ein elektrisches Steuersignal auslöst.

Ein berührungslos arbeitender Einklemmschutz ist in der EP 0 648 628 B1 offenbart. Die bekannte Vorrichtung weist einen elektrischen Leiter auf, der in dem Öffnungsbereich einer Fensterscheibe ein elektrisches Feld erzeugt. Das Vorhandensein eines Hindernisses ruft eine Änderung der Dielektrizitätskonstante in dem Öffnungsbereich hervor, die sich als Abweichung in der Frequenz, Phase oder Amplitude eines das elektrische Feld durch den Leiter erzeugenden Schwingkreises niederschlägt. Diese Abweichung wird ausgewertet, um ein Steuersignal für einen die Fensterscheibe bewegenden Antrieb zu generieren. Der das elektrische Feld ausstrahlende Leiter ist an einer die Fensterscheibe abdichtenden Dichtung angeordnet und kann zugleich als Armierung für die Dichtung dienen.

Darüber hinaus ist ein berührungslos arbeitender Einklemmschutz aus der EP 1 154 110 A2 bekannt. Die Wirkungsweise dieser Vorrichtung beruht auf einer durch ein elektrisch leitendes Hindernis hervorgerufenen Änderung der Kapazität eines zwischen zwei elektrischen Leitern erzeugten elektrischen Felds. Einer der beiden Leiter, die Sensorelektrode, ist in eine das Schließelement abdichtende Dichtung integriert und wird mit einer vorgegebenen elektrischen Ladung beaufschlagt. Auf diese Weise läßt sich zwischen der Sensorelektrode und dem anderen Leiter, der Grundelektrode, die beispielsweise durch einen Rahmen des Kraftfahrzeugs, an dem die Dichtung befestigt ist, gebildet wird, eine Referenzkapazität bestimmen, deren durch ein Hindernis hervorgerufene Änderung ein Steuersignal für einen das Schließelement bewegenden Antrieb auslöst. Die Grundelektrode kann auch durch einen gleichfalls in der Dichtung integrierten Leiter gebildet werden. Die Ausrichtung des elektrischen Felds hängt in diesem Fall von der wechselseitigen Anordnung von Sensorelektrode und Grundelektrode ab.

Als Nachteil der bekannten Vorrichtung hat sich herausgestellt, daß sich die Bewegung des Schließelements als störender Einfluß auf die Referenzkapazität bemerkbar macht. Dieser Einfluß läßt sich zwar durch eine elektronische Schaltung kompensieren, dies ist aber mit einem vergleichsweise hohen Aufwand verbunden. Als unbefriedigend in diesem Zusammenhang hat sich zudem gezeigt, das elektrische Feld durch eine entsprechende Anordnung von Sensorelektrode und Grundelektrode auszurichten. Wenngleich der Einfluß des Schließelements auf diese Weise reduziert wird, läßt sich eine vollständige Elimination nicht erreichen.

Der Erfindung liegt die **Aufgabe** zugrunde, eine Vorrichtung der eingangs genannten Art dahingehend weiterzubilden, daß sich auf einfache Weise eine Ausrichtung des elektrischen Felds erzielen läßt, bei der ein hinderlicher Einfluß des Schließelements auf die kapazitive Änderung des elektrischen Felds ausgeschlossen ist.

Zur **Lösung** dieser Aufgabe sind bei einer Vorrichtung mit den oben genannten Merkmalen in Übereinstimmung mit Anspruch 1 Leitmittel vorgesehen, die eine aus einem elektrisch leitenden Werkstoff bestehende Leitfläche aufweisen, wobei die Leitmittel elektrisch isoliert sind und das Schließelement gegenüber dem durch den elektrischen Leiter erzeugten elektrischen Feld abschirmen.

Eine solchermaßen ausgestaltete Vorrichtung beruht auf der Erkenntnis, daß sich durch das Vorsehen von Leitmitteln auf einfache Weise eine gezielte Ausrichtung des elektrischen Felds auf ein Gebiet des Öffnungsbereichs des Schließelements erreichen läßt, in dem das Schließelement keinen störenden Einfluß ausüben kann. Erfindungsgemäß wird dies dadurch ermöglicht, daß die Leitmittel das Schließelement gegenüber dem durch den elektrischen Leiter erzeugten elektrischen Feld abschirmen. Zu diesem Zweck ist es erforderlich, daß die Leitmittel eine die Abschirmung bewirkende Leitfläche aufweisen, die aus einem elektrisch leitenden Werkstoff, beispielsweise Metall, besteht. Um eine wirksame Abschirmung sicherzustellen, ist es zudem notwendig, daß die Leitmittel elektrisch isoliert angeordnet sind. Die Bestimmung der sich zwischen dem elektrischen Leiter respektive der Sensorelektrode und einer Grundelektrode, beispielsweise dem Rahmen des Kraftfahrzeugs, ergebenden Referenzkapazität wird auf diese Weise nicht beeinträchtigt. Das Vorsehen der Leitmittel macht es entbehrlich, die Kinematik des Schließelements zu erfassen. Im Unterschied zum Stand der Technik kann somit auf eine vergleichsweise aufwendige elektronische Kompensationsschaltung verzichtet werden.

Vorteilhafte Ausgestaltungen der erfindungsgemäßen Vorrichtung stellen die Gegenstände der Ansprüche 2 bis 9 dar.

So ist es in Hinsicht auf eine einfache Montage von Vorteil, die Leitmittel an einer das Schließelement abdichtenden Dichtung, die aus einem elastisch verformbaren Werkstoff gefertigt und an einem Rahmen des Kraftfahrzeugs befestigt ist, anzuordnen. Dabei ist es zudem von besonderem Vorteil, wenn die Leitmittel eine metallene Einlage sind, die in die Dichtung eingebettet ist. Die metallene Einlage läßt sich beispielsweise durch Koextrusion fertigungsgerecht in der Dichtung integrieren. Zweckmäßigerweise ist die metallene Einlage eine Platte, so daß sich eine vergleichsweise große Leitfläche und damit eine zuverlässige Abschirmung des Schließelements erreichen läßt. Je nach Anwendungsfall kann es ferner zweckmäßig sein, eine oder mehrere Platten vorzusehen, um eine gezielte Ausrichtung des elektrischen Felds zu bewirken.

Vorteilhafterweise sind die Leitmittel durch eine Armierung der Dichtung gebildet. Dichtungen, die aus einem elastomeren Werkstoff, wie beispielsweise Ethylen-Propylen-Dien-Kautschuk (EPDM), bestehen, weisen üblicherweise eine Armierung oder Verstärkungseinlage auf, um über eine für die Befestigung an einem Rahmen erforderliche Steifheit zu verfügen. Durch eine entsprechende Anordnung der in der Regel aus Metall bestehenden Armierung ist es möglich, die Armierung zugleich als Leitmittel für die Abschirmung des Schließelements zu nutzen.

In einer bevorzugten Weiterbildung der erfindungsgemäßen Vorrichtung können die Leitmittel alternativ ein elektrisch leitfähiger Bereich der Dichtung sein. Ein solcher Bereich läßt sich beispielsweise durch Koextrusion relativ einfach fertigen.

Gemäß einer weiteren alternativen Ausgestaltung der erfindungsgemäßen Vorrichtung sind die Leitmittel an einer den Rahmen und/oder die Dichtung zumindest teilweise verdeckenden Verkleidung angeordnet. Eine derartige Verkleidung findet üblicherweise als Zierleiste Anwendung, um das optische Erscheinungsbild in ästhetischer Hinsicht ansprechend zu gestalten. Die Leitmittel können dabei beispielsweise in der Verkleidung eingebettet sein oder durch diese selbst gebildet werden.

Um das elektrische Feld gezielt auf das Gebiet des Öffnungsbereiches des Schließelements auszurichten, in dem ein Hindernis auftreten kann, ist die Dichtung und/oder die Verkleidung bevorzugt aus einem Werkstoff gefertigt, der eine vergleichsweise hohe Dielektrizitätszahl aufweist. Auf diese Weise trägt die relative Permittivität der Dichtung zu einer gezielten Ausrichtung des elektrischen Felds bei.

Bevorzugt sind die Leitmittel im Bereich des elektrischen Leiters angeordnet, um eine kompakte Bauweise sicherzustellen.

Schließlich wird in Weiterbildung der erfindungsgemäßen Vorrichtung vorgeschlagen, daß der Sensor einen als Gegenelektrode dienenden, geerdeten elektrischen Leiter aufweist, um das elektrische Feld gezielt auszurichten.

Einzelheiten und weitere Vorteile der erfindungsgemäßen Vorrichtung ergeben sich aus der nachfolgenden Beschreibung bevorzugter Ausführungsbeispiele. In den die Ausführungsbeispiele lediglich schematisch darstellenden Zeichnungen veranschaulichen im einzelnen:
- Fig. 1: eine Seitenansicht eines Kraftfahrzeugs;
- Fig. 2a: einen Schnitt entlang der Schnittlinie II in Fig. 1, der eine erste Ausführungsform der erfindungsgemäßen Vorrichtung zeigt;
- Fig. 2b: einen Schnitt gemäß Fig. 2a, der eine zweite Ausführungsform der erfindungsgemäßen Vorrichtung zeigt;
- Fig. 2c: einen Schnitt gemäß Fig. 2a, der eine dritte Ausführungsform der erfindungsgemäßen Vorrichtung zeigt, und
- Fig. 2d: einen Schnitt gemäß Fig. 2a, der eine vierte Ausführungsform der erfindungsgemäßen Vorrichtung zeigt.

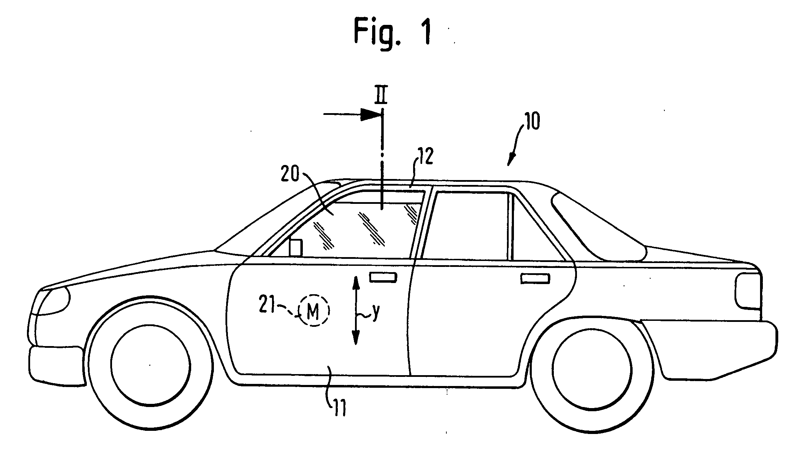

In Fig. 1 ist ein Kraftfahrzeug 10 dargestellt, das im Bereich einer Vordertür 11 mit einer durch einen Elektromotor 21 angetriebenen Fensterscheibe 20 versehen ist. Die ein Schließelement darstellende Fensterscheibe 20 ist in Antriebsrichtung y des Elektromotors 21 zwischen einer Offenstellung und ihrer Schließstellung bewegbar.

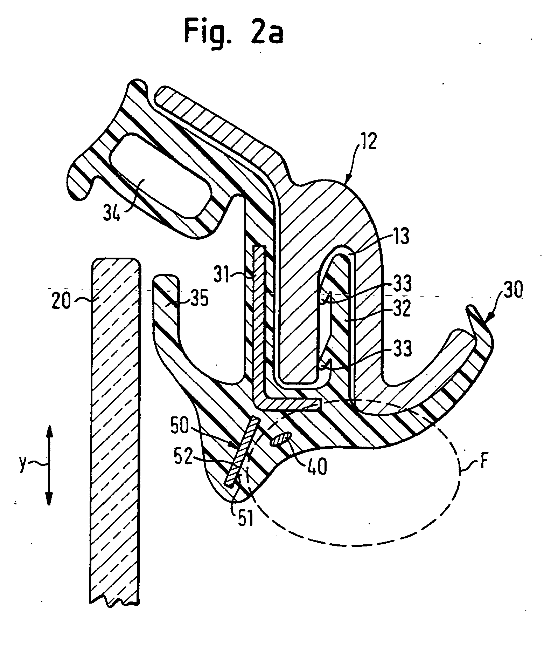

Wie die Figuren 2a bis 2d näher erkennen lassen, weist die Vordertür 11 einen metallenen Rahmen 12 auf, an dem eine die Fensterscheibe 20 abdichtende Dichtung 30 befestigt ist. Die aus einem elastomeren Werkstoff, beispielsweise EPDM, gefertigte Dichtung 30 ist zur Erhöhung ihrer Steifheit mit einer aus Metall bestehenden Armierung 31 versehen. Die Dichtung 30 weist zudem einen Befestigungsabschnitt 32 auf, der sich in einem Kanal 13 des Rahmens 12 erstreckt und zum Festlegen der Dichtung 30 mit Haltelippen 33 versehen ist. Die Dichtung 30 ist zudem mit einer Hohlkammer 34 und Dichtlippen 35 versehen, welche die Fensterscheibe 20 führen und abdichten.

Weiterhin ist in der Dichtung 30 ein elektrischer Leiter 40 eingebettet, der eine Sensorelektrode darstellt, wie sie in der EP 1 154 110 A2 beschrieben ist. Der elektrische Leiter 40 dient demzufolge dazu, ein elektrisches Feld F zu erzeugen, wobei der geerdete Rahmen 12 oder ein anderer geerdeter Leiter die hierzu erforderliche Gegenelektrode darstellt. Eine nicht gezeigte Auswerteeinheit erfaßt die durch ein elektrisch leitendes Hindernis im Bereich des elektrischen Feldes F an dem elektrischen Leiter 40 hervorgerufene Änderung der Kapazität und stellt in Abhängigkeit von der Änderung ein Steuersignal für den Elektromotor 21 bereit, das im Bedarfsfall den Elektromotor 21 stoppt.

Wie in den Fig. 2a bis 2d veranschaulicht ist, wird die Fensterscheibe 20 durch Leitmittel 50 von dem elektrischen Feld F abgeschirmt. Auf diese Weise übt die Fensterscheibe 20 keinen störenden Einfluß auf die Referenzkapazität des elektrischen Felds F aus. Wäre die Fensterscheibe 20 nicht abgeschirmt, würde sich durch die Bewegung der Fensterscheibe 20 die Dielektrizitätszahl in dem Öffnungsbereich der Fensterscheibe 20 dauernd ändern. Wie im Stand der Technik wäre es dann erforderlich, diesen Einfluß der Fensterscheibe 20 auf die Referenzkapazität durch eine entsprechende elektronische Schaltung zu kompensieren. Bei der in den Fig. 2a bis 2d gezeigten Vorrichtung ist eine solche Kompensationsschaltung entbehrlich, da das elektrische Feld F von der Fensterscheibe 20 durch die Leitmittel 50 weitestgehend ferngehalten wird. Die Leitmittel 50 weisen zu diesem Zweck eine Leitfläche 51 auf, die das elektrische Feld F gezielt ausrichtet. Die Ausrichtung ist so, daß sich das elektrische Feld F in einem Teilgebiet des Öffnungsbereiches der Fensterscheibe 21 erstreckt. Das Teilgebiet ist dabei vorzugsweise auf die Gefahrenzone beschränkt, in der die Erkennung eines Hindernisses für einen zuverlässigen Einklemmschutz unerläßlich ist.

Die in den Fig. 2a bis 2d gezeigten Ausführungsformen unterscheiden sich durch die Ausgestaltung der Leitmittel 50. Bei der Ausführungsform gemäß Fig. 2a sind die Leitmittel 50 eine plattenförmige, metallene Einlage 52, die in die Dichtung 30 eingebettet ist. Die Dichtung 30 bewirkt eine elektrische Isolierung der Einlage 52 und stellt damit sicher, daß die an dem elektrischen Leiter 40 gemessene Referenzkapazität weitgehend konstant ist.

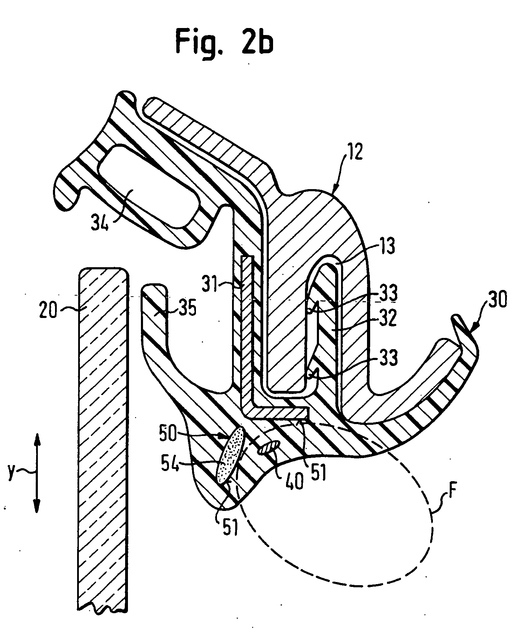

Die in Fig. 2b gezeigte Ausführungsform unterscheidet sich von der Vorrichtung gemäß Fig. 2a zum einen darin, daß anstelle der Einlage 52 ein elektrisch leitfähiger Bereich 54 der Dichtung 30 vorgesehen ist. Zum anderen ist die Armierung 31 elektrisch isoliert, so daß sie über ein elektrisches Potential verfügt, das der Ausbreitung des elektrischen Feldes F entgegenwirkt. Die somit zur gezielten Ausrichtung des elektrischen Feldes F beitragende Armierung 31 stellt daher einen Bestandteil der Leitmittel 50 dar.

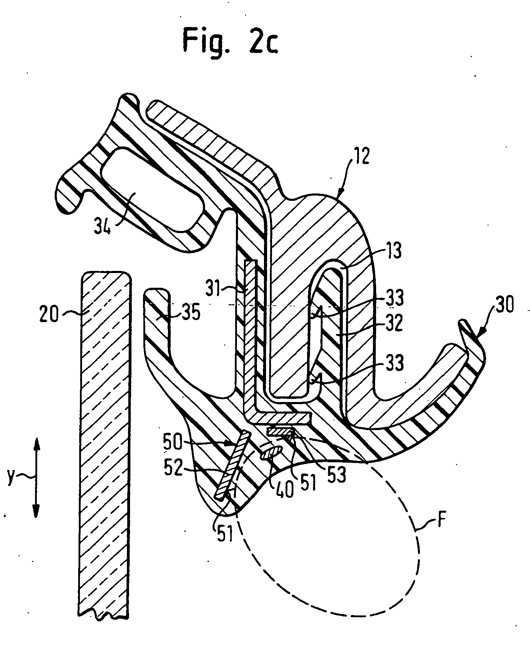

Demgegenüber weist die in Fig. 2c gezeigte Ausführungsform zwei metallene Einlagen 52, 53 auf, die nahe des elektrischen Leiters 40 in der Dichtung 30 eingebettet sind. Die Einlagen 52, 53 richten das elektrische Feld F so aus, daß die Fensterscheibe 20 abgeschirmt ist.

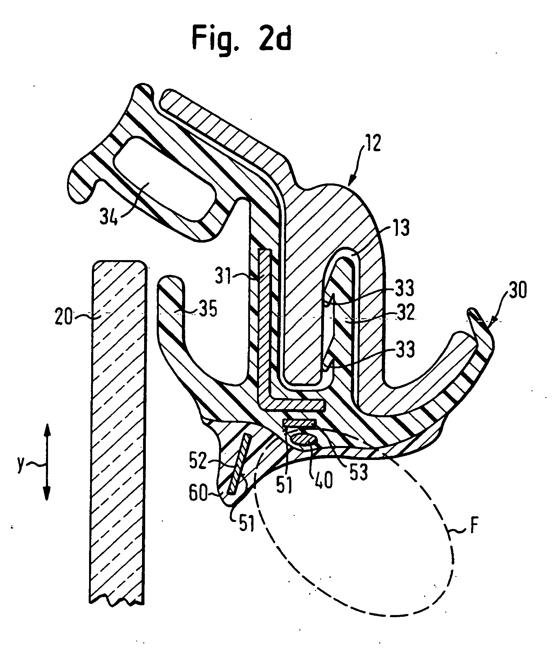

Die Ausführungsform gemäß Fig. 2d weist eine aus Kunststoff bestehende Verkleidung 60 auf, die an dem Dichtungsprofil 30 festgelegt ist. Die Verkleidung 60 dient als Zierleiste, welche die Dichtung 30 zumindest teilweise verdeckt, um einen in ästhetischer Hinsicht ansprechenden optischen Eindruck zu vermitteln. Im Vergleich zu der Ausführungsform gemäß Fig. 2c ist die Einlage 52 in die Verkleidung 60 integriert, wohingegen die Einlage 53 in der Dichtung 30 eingebettet bleibt. Das elektrische Feld F wird durch die relative Permittivität des Werkstoffs, aus dem die Dichtung 30 und die Verkleidung 60 bestehen, beeinflußt. Aus diesem Grund kann durch eine geeignete Werkstoffauswahl die Ausrichtung des elektrischen Feldes F unterstützt werden.

Die zuvor beschriebenen Ausführungsformen einer Vorrichtung zum Erkennen eines Hindernisses in dem Öffnungsbereich der Fensterscheibe 20 zeichnen sich gegenüber einem konventionellen Einklemmschutz dadurch aus, daß das elektrische Feld F gezielt ausgerichtet wird. Ursache hierfür sind die Leitmittel 50, welche die Fensterscheibe 20 gegenüber dem durch den elektrischen Leiter 40 erzeugten elektrischen Feld F abschirmen. Die Fensterscheibe 20 übt somit keinen oder allenfalls einen vernachlässigbaren Einfluß auf die Referenzkapazität des elektrischen Feldes F aus, so daß es nicht erforderlich ist, die Bewegung der Fensterscheibe 20 bei der Auswertung der kapazitiven Änderung des elektrischen Feldes F zu berücksichtigen. Nicht zuletzt kann die zuvor beschriebene Vorrichtung zum Erkennen eines Hindernisses nicht nur als Einklemmschutz für die Fensterscheibe 20 Anwendung finden, sondern auch für andere Schließelemente des Kraftfahrzeugs 10, wie beispielsweise ein Schiebedach oder eine Schiebetür, eingesetzt werden. Maßgeblich ist lediglich, daß das Schließelement durch die Leitmittel 50 von dem elektrischen Feld F abgeschirmt wird.

### Bezugszeichenliste

- 10: Kraftfahrzeug
- 11: Vordertür
- 12: Rahmen
- 13: Kanal

- 20: Fensterscheibe
- 21: Elektromotor

- 30: Dichtung
- 31: Armierung
- 32: Befestigungsabschnitt
- 33: Haltelippe
- 34: Hohlkammer
- 35: Dichtlippe

- 40: elektrischer Leiter

- 50: Leitmittel
- 51: Leitfläche
- 52: Einlage
- 53: Einlage
- 54: elektrisch leitfähiger Bereich

- 60: Verkleidung

- F: elektrisches Feld
- y: Antriebsrichtung

## Patentansprüche

1. Vorrichtung zum Erkennen eines Hindernisses in dem Öffnungsbereich eines zwischen einer Offenstellung und einer Schließstellung bewegbaren Schließelements eines Kraftfahrzeugs (10), insbesondere einer elektrisch angetriebenen Fensterscheibe (20) oder eines Schiebedachs, mit einem ein Hindernis in dem Öffnungsbereich des Schließelements (20) erfassenden Sensor, der wenigstens einen ein elektrisches Feld (F) in dem Öffnungsbereich des Schließelements (20) erzeugenden elektrischen Leiter (40) aufweist, **gekennzeichnet durch** Leitmittel (50), die eine aus einem elektrisch leitenden Werkstoff bestehende Leitfläche (51) aufweisen, wobei die Leitmittel (50) elektrisch isoliert sind und das Schließelement (20) gegenüber dem **durch** den elektrischen Leiter (40) erzeugten elektrischen Feld (F) abschirmen.

2. Vorrichtung nach Anspruch 1, **gekennzeichnet durch** eine das Schließelement (20) abdichtende Dichtung (30), die aus einem elastisch verformbaren Werkstoff gefertigt und an einem Rahmen (12) des Kraftfahrzeugs (10) befestigt ist, wobei die Leitmittel (50) an der Dichtung (30) angeordnet sind.

3. Vorrichtung nach Anspruch 2, **dadurch gekennzeichnet, daß** die Leitmittel (50) eine metallene Einlage (52, 53) sind, die in die Dichtung (30) eingebettet ist.

4. Vorrichtung nach Anspruch 3, **dadurch gekennzeichnet, daß** die Leitmittel (50) durch eine Armierung (31) der Dichtung (30) gebildet sind.

5. Vorrichtung nach Anspruch 2, **dadurch gekennzeichnet, daß** die Leitmittel (50) ein elektrisch leitfähiger Bereich (54) der Dichtung (30) sind.

6. Vorrichtung nach einem der Ansprüche 1 bis 5, **dadurch gekennzeichnet, daß** die Leitmittel (50) an einer den Rahmen (12) und/oder die Dichtung (30) zumindest teilweise verdeckenden Verkleidung (60) angeordnet sind.

7. Vorrichtung nach Anspruch 6, **dadurch gekennzeichnet, daß** die Dichtung (30) und/oder die Verkleidung (60) aus einem Werkstoff gefertigt ist, der eine vergleichsweise hohe Dielektrizitätszahl aufweist.

8. Vorrichtung nach einem der Ansprüche 1 bis 7, **dadurch gekennzeichnet, daß** die Leitmittel (50) im Bereich des elektrischen Leiters (40) angeordnet sind.

9. Vorrichtung nach einem der Ansprüche 1 bis 8, **dadurch gekennzeichnet, daß** der Sensor einen als Gegenelektrode dienenden, geerdeten elektrischen Leiter aufweist.

## Claims

1. A device for sensing an obstacle in the opening range of an automotive (10) closure element movable between an open position and a closed position, more particularly an electrically powered door window (20) or sunroof, including for sensing an obstacle in the opening range of said closure element (20) a sensor comprising at least one electrical conductor (40) generating an electrical field (F) in the opening range of said closure element (20), **characterized by** conductive means (50) comprising a conductive surface area (51) consisting of an electrically conductive material, said conductive means (50) being electrically insulated and shielding said closure element (20) from said electrical field (F) generated by said electrical conductor (40)

2. The device as set forth in claim 1, **characterized by** a weatherseal (30) sealing said closure element (20), said weatherseal (30) being made of an elastomeric material and secured to a frame (12) of said motor vehicle (10), said conductive means (50) being arranged on said weartherseal (30).

3. The device as set forth in claim 2, **characterized in that** said conductive means (50) is a metallic inlay (52, 53) embedded in said weatherseal (30).

4. The device as set forth in claim 3, **characterized in that** said conductive means (50) are formed by a strengthener (31) of said weatherseal (30).

5. The device as set forth in claim 2, **characterized in that** said conductive means (50) form an electrically conductive portion (54) of said weatherseal (30).

6. The device as set forth in any of the claims 1 to 5, **characterized in that** said conductive means (50) is arranged on a trim (60) covering said frame (12) and/or weatherseal (30) at least in part.

7. The device as set forth in claim 6, **characterized in that** said weatherseal (30) and/or said trim (60) is made of a material featuring a relatively high dielectric constant.

8. The device as set forth in any of the claims 1 to 6, **characterized in that** said conductive means (50) are arranged in the region of said electrical conductor (40)

9. The device as set forth in any of the claims 1 to 8, **characterized in that** said sensor comprise a grounded electrical conductor serving as the opposing electrode.

## Revendications

1. Dispositif pour reconnaître un obstacle dans la zone d'ouverture d'un ouvrant d'un véhicule automobile (10) mobile entre une position ouverte et une position fermée, en particulier d'une vitre (20) à entraînement électrique ou d'un toit coulissant, comportant un détecteur détectant un obstacle dans la zone d'ouverture de l'ouvrant (20) et pourvu d'au moins un conducteur électrique (40) générant un champ électrique (F) dans la zone d'ouverture de l'ouvrant (20), **caractérisé par** des moyens conducteurs (50) qui comprennent une surface conductrice (51) constituée d'un matériau électriquement conducteur, les moyens conducteurs (50) étant électriquement isolés et protégeant l'ouvrant (20) vis-à-vis du champ électrique (F) généré par le conducteur électrique (40).

2. Dispositif selon la revendication 1, **caractérisé par** un joint d'étanchéité (30) étanchant l'ouvrant (20), qui est fabriqué à partir d'un matériau élastiquement déformable et fixé sur un cadre (12) du véhicule automobile (10), les moyens conducteurs (50) étant agencés sur le joint (30).

3. Dispositif selon la revendication 2, **caractérisé en ce que** les moyens conducteurs (50) sont un insert métallique (52, 53) qui est noyé dans le joint (30).

4. Dispositif selon la revendication 3, **caractérisé en ce que** les moyens conducteurs (50) sont formés par une armature (31) du joint (30).

5. Dispositif selon la revendication 2, **caractérisé en ce que** les moyens conducteurs (50) sont une zone électriquement conductrice (54) du joint (30).

6. Dispositif selon l'une des revendications 1 à 5, **caractérisé en ce que** les moyens conducteurs (50) sont agencés sur un habillage (60) recouvrant au moins partiellement le cadre (12) et/ou le joint (30).

7. Dispositif selon la revendication 6, **caractérisé en ce que** le joint (30) et/ou l'habillage (60) sont fabriqués d'un matériau qui présente une constante diélectrique comparativement élevée.

8. Dispositif selon l'une des revendications 1 à 7, **caractérisé en ce que** les moyens conducteurs (50) sont agencés dans la zone du conducteur électrique (40).

9. Dispositif selon l'une des revendications 1 à 8, **caractérisé en ce que** le détecteur comprend un conducteur électrique mis à la terre servant de contre-électrode.
